# EUROPEAN PATENT APPLICATION

(11) **EP 4 623 673 A1**
(43) Date of publication of application: **01.10.2025**
(21) Application number: 24167131.2
(22) Date of filing: 28.03.2024
(51) Int. Cl.: A01G 9/14, A01G 31/06, B65D 43/02, B65G 1/04

(54) **A LIGHTING MODULE**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a lighting module (700) configured to fit atop a storage container for an automated storage and retrieval system. The lighting module can be configured as a container lid. The lighting module can include an array of LEDs (706). A stacker frame to hold the lighting module and one or more storage container is also disclosed. A power supply module for providing power to a stacker frame is further disclosed.

## Description

### TECHNICAL FIELD

The disclosure relates to a lighting module. More particularly, it relates to a lighting module configured to fit atop a storage container, a stacker frame for holding one or more storage containers, a power supply module for providing power to a stacker frame, a control system for controlling one or more lighting modules and a vertical farm comprising one or more stacker frames.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Another example use of an automated storage and retrieval system is vertical farming in which storage containers within the system can be used to grow and/or store crops, plants or other biological matter.

One known vertical farming system uses frames which allow storage containers to be stored one on top of another in a vertical stack. A drawback of such a system is that by storing containers in a vertical stack, the contents of the containers are deprived of light. A lack of light to the inside of the container can inhibit vertical farming by decreasing efficient crop growth.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a perspective view of a first lighting module suitable for use in the system of Fig. 1;
Fig. 5B shows a bottom view of the lighting module of Fig. 5A;
Fig. 6A shows a perspective view of a second lighting module suitable for use in the system of Fig. 1;
Fig. 6B shows a bottom view of the lighting module of Fig. 6A;
Fig. 7A shows a perspective view of a third lighting module suitable for use in the system of Fig. 1;
Fig. 7B shows a bottom view of the lighting module of Fig. 7A;
Fig. 8 shows a top view of a battery module;
Fig. 9A shows a perspective view of a stacker frame suitable for use in the system of Fig. 1;
Fig. 9B shows a perspective view of the stacker frame of Fig. 9A further comprising a battery module;
Fig. 10 shows a side view of a robotic container handling vehicle moving a lighting module according to the present disclosure.

### DETAILED DESCRIPTION

In overview, the disclosure relates to a lighting module configured to fit atop a storage container for an automated storage and retrieval system. The lighting module can be arranged to light the inside of a storage container to cause more efficient crop growth. The lighting module can be internally or externally powered and can be handled by a container handling vehicle of the automated storage and retrieval system. These features interact to provide a flexible lighting solution for an automated storage and retrieval system.

### Automated storage and retrieval system overview

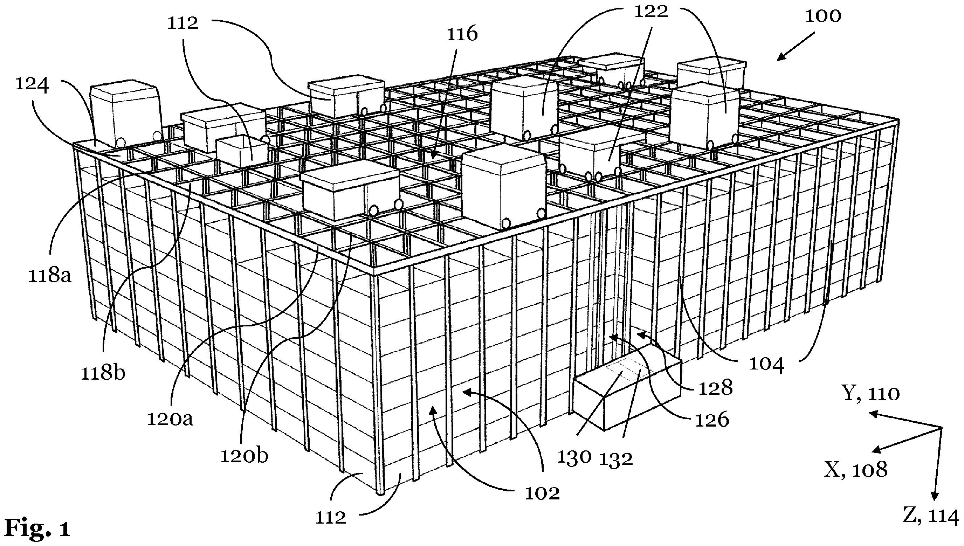

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

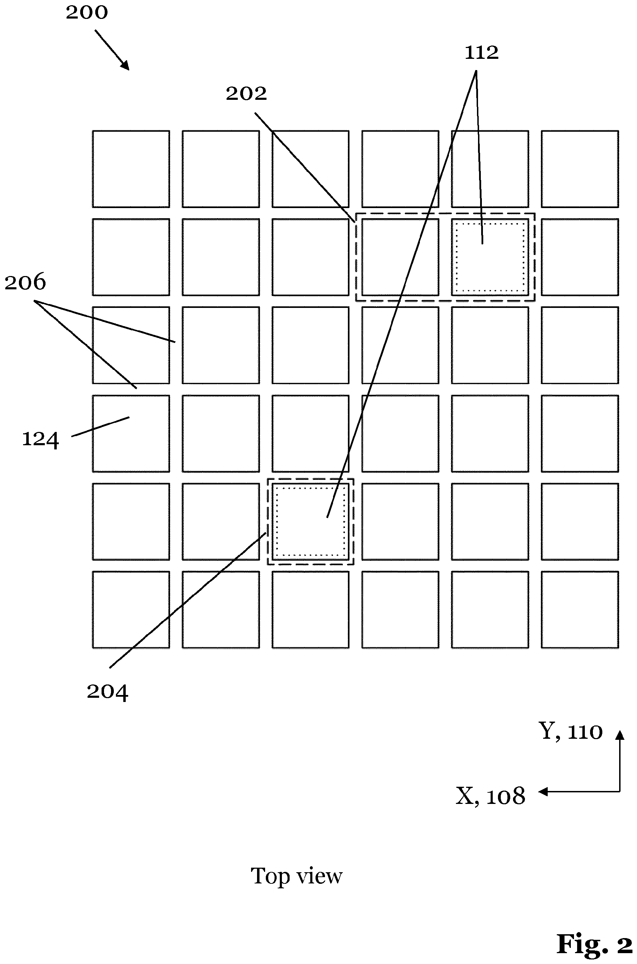

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

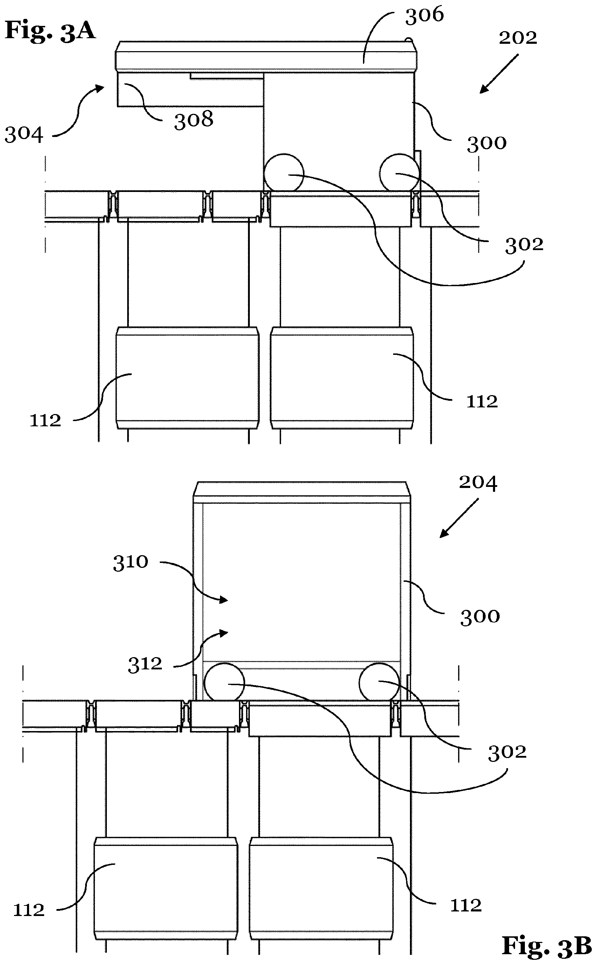

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

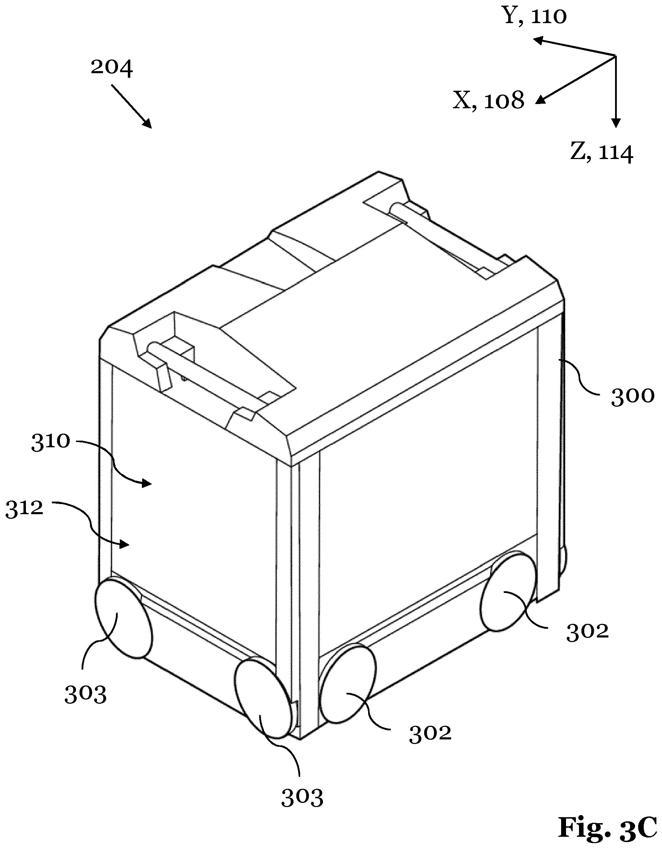

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

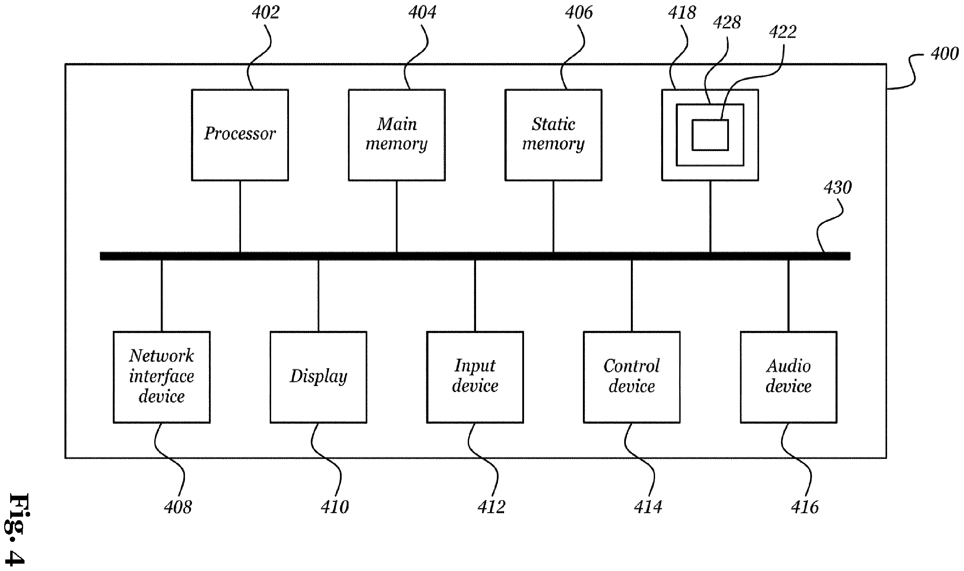

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Lighting Module

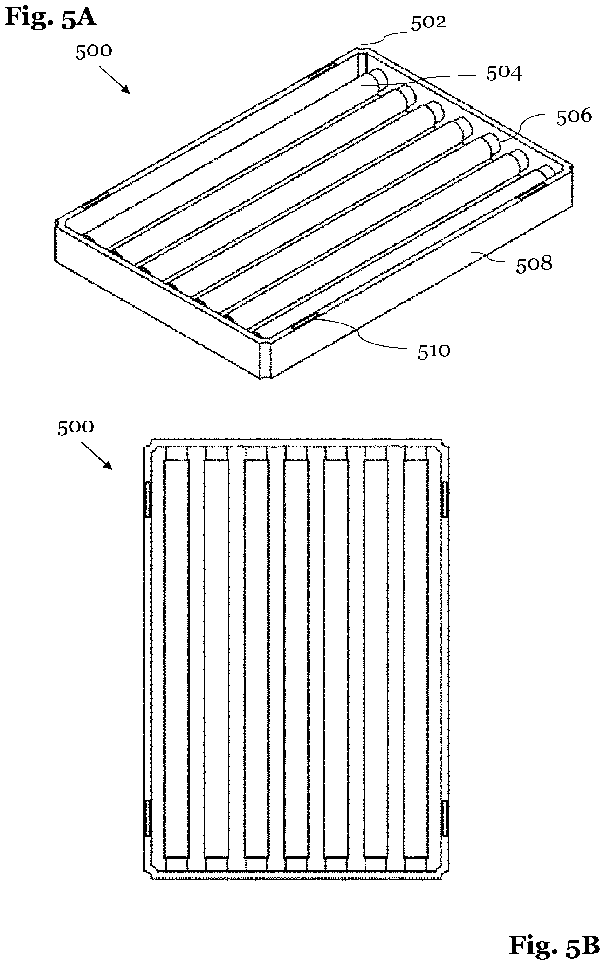

Figs. 5A, 5B show a lighting module 500, according to the present disclosure, configured to fit atop a storage container 112 for an automated storage and retrieval system. The storage container 112 can be the storage container 112 described above with reference to Fig. 1.

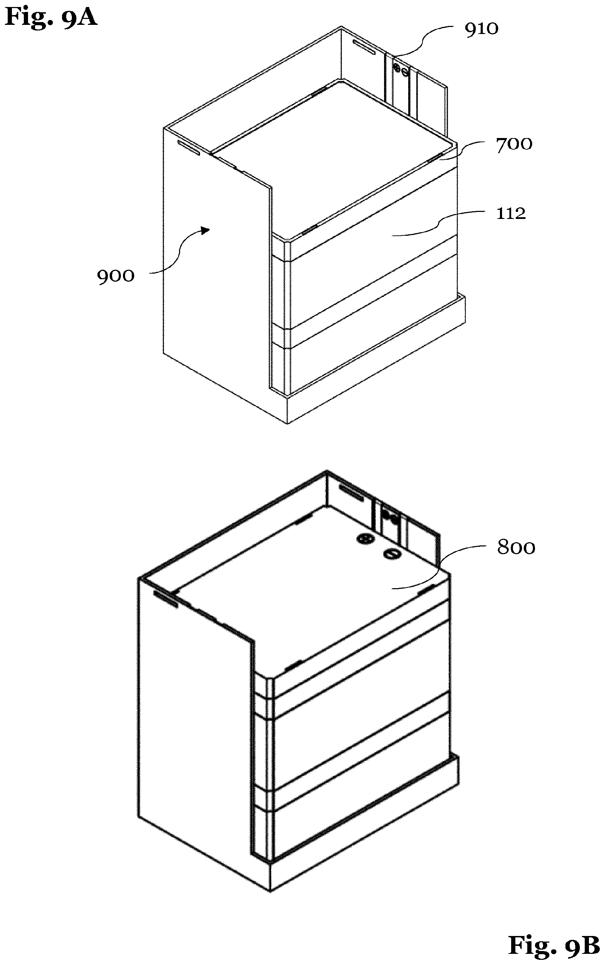

The lighting module 500 can comprise a substantially rectangular frame 508 with dimensions such that the lighting module fits atop a storage container 112. The lighting module can have dimensions such that it entirely covers the top of a storage container. In other words, the lighting module 500 can be configured to act as a lid to a container 112. The lighting module can completely or partially seal a container 112. Alternatively, the lighting module can have dimensions such that it partially covers the top of a storage container. The frame 508 can be rigid. The frame 508 can comprise cutout corners 502 so that it is arranged to fit in a stacker frame 900 (described below with reference to Figs. 9A, 9B).

The lighting module 500 can comprise one or more lighting sources 504 such as one or more LEDs, one or more bulbs and/or one or more other lighting elements. The lighting sources 504 can produce light at an optimal wavelength for crop growth. The lighting source 504 can have a variable power, brightness and/or wavelength. The lighting source can be varied and controlled by a control system 400, for example the control system 400 of Fig. 4. The lighting source can be turned on or off. The lighting sources can be turned on and off according to a timer and/or schedule for optimum crop growth. The one or more lighting sources 504 can be uniformly distributed on a lower face of the lighting module 500. The one or more lighting sources 504 can be internally held by the frame 508. The one or more lighting sources 504 can be arranged in the frame 508 such that when atop a storage container 122, the one or more lighting sources 504 can illuminate the inside of said container 112.

The lighting module 500 may further comprise a temperature sensing device, such as a digital thermometer, which can detect if a lighting source 504 surpasses a threshold temperature. If a lighting module 500 surpasses a threshold temperature, the control system 400 can turn off the lighting source 504.

The lighting module 500 can comprise lighting source connectors 506 for connecting the one or more lighting sources 504 to the frame 508. The lighting source connectors 506 can be a bulb socket for example. The lighting source connectors can allow the frame 508 to power the one or more lighting sources 504.

The lighting module 500 can comprise a gripper engagement device 510. The gripper engagement device 510 is arrange to receive the gripper of a container handling vehicle 122. The gripper engagement device 500 can be holes, tubers and/or slots with dimensions such that a gripper of a robot 122 can be received. The gripper engagement device 510 could be a flat panel such that a suction gripper of a robot 122 can be received. The gripper engagement device 510 could be a magnetic panel such that a magnetic gripper of a robot 122 could be received.

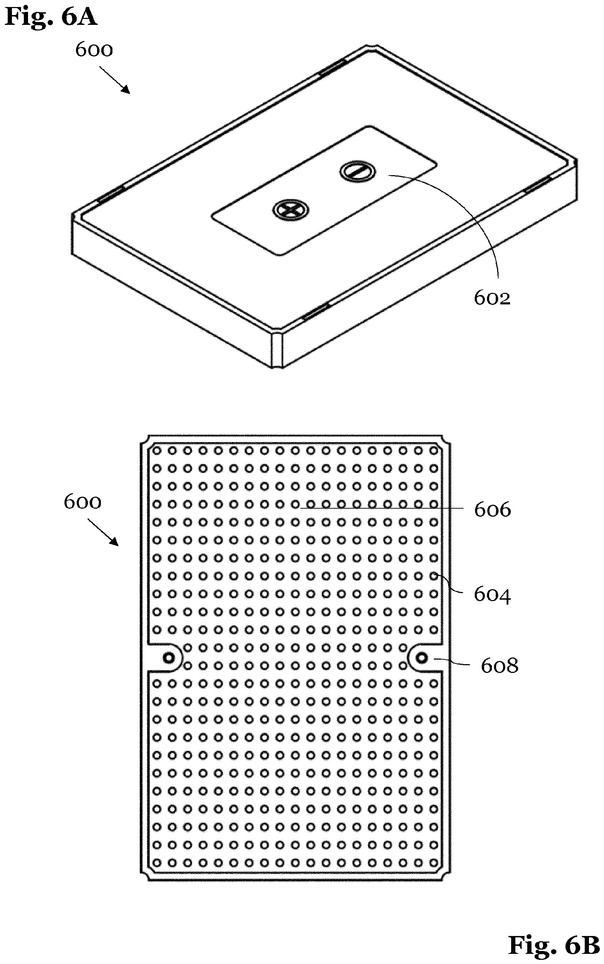

Figs. 6A, 6B show an embodiment of a lighting module 600 which is substantially similar to the lighting module 500 but comprises an alternative one or more lighting sources 604 and lighting source connector 608 as well as additionally comprising an internal power supply 602.

The internal power supply 602 of the lighting module 600 can be a battery or any other appropriate power supplying component. The internal power supply 602 can provide power to the one or more lighting sources 604. The internal power supply 602 can supply power to the one or more lighting source 604 using the lighting source connector 608. The internal power supply 602 can be rechargeable. The internal power supply 602 may be removable from the lighting module 600.

The one or more lighting source 604 is shown to be one or more light emitting diodes (LEDs) in the embodiment of Fig. 6B. The one ore more LEDs can be uniformly arranged in an LED array. The luminosity, emitted wavelength or other characteristics of the one or more LEDs may be controlled by a control system 400, such as the control system 400 of Fig. 4. Each lighting source 604 of the oner of more lighting source 604 may be controlled independently.

The one or more lighting sources 604 may be arranged on the lower surface of a back panel 606 of the lighting module 600. The back panel may be substantially opaque. The back panel 606 may provide electrical connections between the one or more lighting source 604. The back panel 606 may connect the one or more lighting sources 604 in parallel or series. The back panel 606 may connect the one or more lighting source 604 to the internal power supply 602. The back panel 606 may connect the one or more lighting sources 604 to the internal power supply 602 via the lighting connectors 608.

The lighting connector 608 connect the one or more lighting sources 604 to the lighting module 600. The lighting connector could be a screw designed to interface with the back panel 606. The lighting connector 608 could be a socket designed to receive a plug of the one or more lighting source 604.

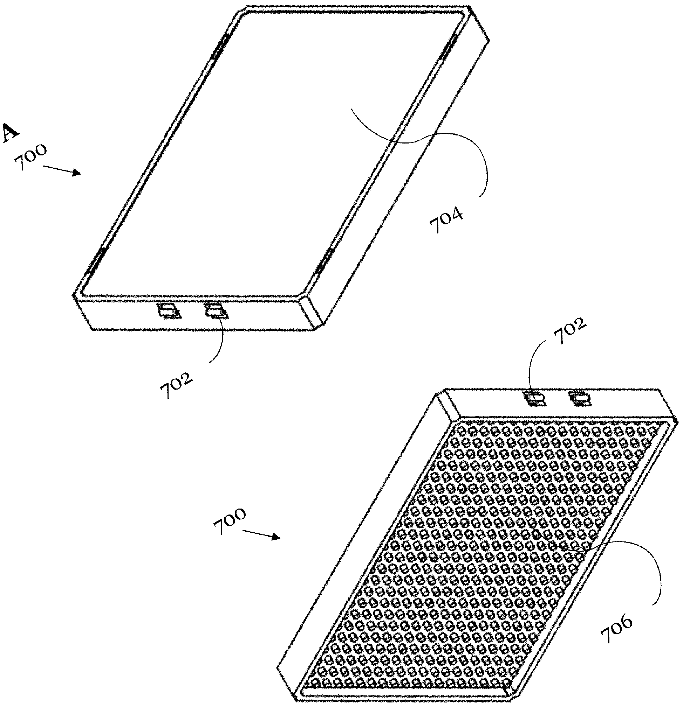

Figs. 7A, 7B show an embodiment of a lighting module 700 which is substantially similar to the lighting module 500 but comprises electrical connections 702 as well as a lighting source 706 and back panel 704 substantially similar to those shown in Fig. 6B.

Fig.7A shows the lighting module from a top perspective view. The top of the back panel 704 can be seen. The back panel 704 can prevent light from leaking out of the container from the lighting source 706. The back panel 704 can protect the lighting sources 706 when containers 122 are stacked atop the lighting module 700. The back panel 708 can be arranged to conduct heat away from the one or more lighting source 706. The back panel 704 can be seen to be substantially similar to the back panel 606 shown in Fig. 6B.

The one or more lighting sources 706 is shown to be an LED array and can be seen to be substantially similar to the lighting sources 604 shown in Fig. 6B.

The one or more electrical connections 702 can be configured to provide power to the one or more lighting sources 706. The one or more electrical connections can conduct electricity. The one or more electrical connections 702 can connect to a electrical power source to provide power to the one or more lighting sources 706. The one or more electrical connections 702 can comprise a plug or socket component. The one or more electrical connections can comprise a biasing means. The biasing means can cause the electrical connections 702 to be biased against a power source. The biasing means may be a spring. The electrical connections 702 can be configured to receive power from a stacker frame 900 (described with reference to Figs. 9A, 9B). The one or more electrical connections 702 can be directly connected to the one or more lighting sources 706. The one or more electrical connections 702 can be connected to the one or more lighting sources 706 via the back panel 704. The lighting module 700 can comprise one or more positive electrical connections 702 and one or more negative electrical connections 704. The lighting module can comprise a positive electrical connection 702 and a negative electrical connection 702 at each end lateral end. A negative electrical connection is configured to be connected to a negative anode of a power source. A positive electrical connection is configured to be connected to a positive cathode of a power source.

### Power supply module

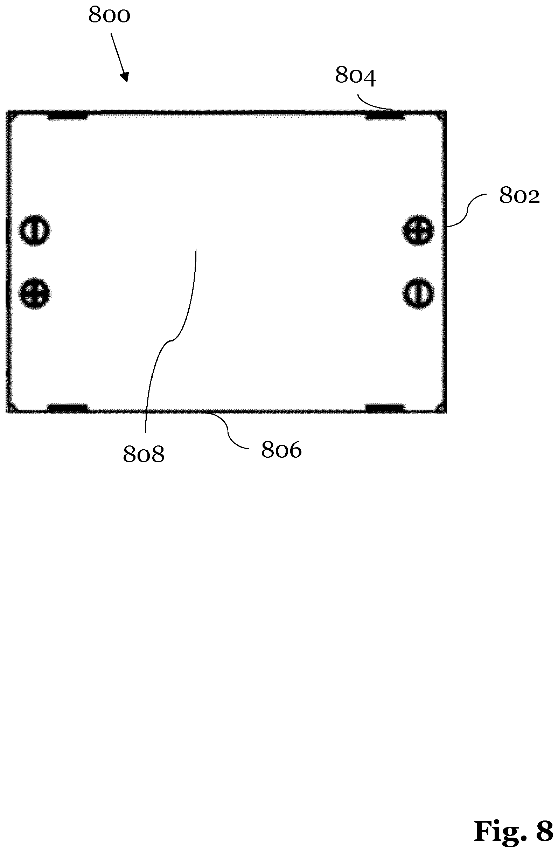

Fig.8 shows a power supply module 800. The power supply module 800 is configured to provide power to a stacker frame 900 (described with reference to Figs. 9A, 9B). The power supply module 800 is configured to provide power to one or more lighting modules 700 via a stacker frame 900. The power module can comprise components substantially similar to that of the lighting module 700. For example, the power supply module 800 can comprise electrical connections 802 substantially similar to the electrical connections 702 described with reference to Figs. 7A, 7B. The power supply module 800 can comprise one or more gripper engagement devices 804 substantially similar to the gripper engagement device 510 described with reference to Fig. 5. The power supply module 800 can comprise a frame 806 substantially similar to the frame 508 described with reference to Fig. 5.

The power supply module 800 can comprise a battery 808, or other electrical power supply component. The battery 808 can be held by the frame 806. The battery 808 can be rechargeable.

The power supply module 800 can provide power from the battery 808 to the electrical connections 802. The electrical connections 802 can provide power from the battery 808 to a stacker frame 900. The electrical connections 802 can receive power from a stacker frame 900 in order to charge the battery 808.

The power supply module 800 can be fetched, moved or otherwise handled by a robot 122 using the gripper engagement device 804.

### Stacker frame

A stacker frame configured to hold one or more lighting modules 700, one or more power supply modules 800 and/or one or more storage containers 112 is shown in Figs. 9A, 9B. The stacker frame 900 can comprise a base portion of dimensions such that a storage container 112 can be received. The stacker frame can comprise a back panel and two side panels extending from a base portion. The back panel and side portions may be of a height to accommodate a plurality of storage containers 112 stacked one on top of another. The stacker frame 900 is configured to connect to another stacker frame 900 atop or below it.

The stacker frame 900 can connect to mains power. For example, the stacker frame can connect to mains power using an electrical connection in a base portion. The stacker frame 900 can comprise a plug component to connect it to mains power. The stacker frame can provide mains power to electrical connections 910. The stacker frame can comprise a battery or other appropriate power supply for providing power to electrical connections 910.

The stacker frame 900 can comprise electrical connections 910. The electrical connections 910 can comprise an electrically conductive panel. The electrical connections can comprise a socket component configured to receive a plug component of a lighting module 700 or power supply module 800. The electrical connections 910 can receive power from a mains power connection to the stacker frame 900. The electrical connections can receive power from an internal power supply of the stacker frame 900. The electrical connections 900 can receive power from a power supply module 800 held in the stacker frame 900. The electrical connections 910 can supply power to a lighting module 800. The electrical connections 910 can receive the electrical connections 802 of a power supply module or the electrical connections 702 of a lighting module 700. For example, the electrical connections 702 of a lighting module 700 can be biased against the electrical connections 910 of the stacker frame such that the lighting module 700 can be powered via the stacker frame 900. As another example, the electrical connections 802 of a power supply module 800 can be biased against the electrical connections 910 of the stacker frame such that the power supply module 800 can provide power to the electrical connections 910 of the stacker frame 900 and subsequently to any lighting modules 800 also connected to the electrical connections 910 of the stacker frame 900. The electrical connections 910 can extend along the full height of a side and/or back panel of the stacker frame 900. The electrical connections 910 can simultaneously connect with a plurality of lighting modules 700, power supply modules 800 and/or or storage containers 112 held within the stacker frame 900. The electrical connections 910 can connect the lighting modules 700, power supply modules 800 and/or or storage containers 112 held within the stacker frame 900 in series.

The stacker frame 900 is shown in Fig. 9A holding at least one lighting modules 700 and at least one storage container 112. The stacker frame 900 can provide power to the at least on lighting module 700 so the lighting module can illuminate the inside of the storage container 112. The lighting module 700 is configured within the stacker frame 900 so that it can be handled by a robot 122, for example the container handling vehicle 122 of Figs. 3A, 3B.

The stacker frame 900 is shown in Fig. 9B holding at least one lighting modules 700, at least one storage container 112 and at least one power supply module 800. The power supply module 800 can provide power to the stacker frame 900. The stacker frame 900 can provide power to the at least on lighting module 700 so the lighting module can illuminate the inside of the storage container 112. The power supply module 800 is configured within the stacker frame 900 so that it can be handled by a robot 122, for example the container handling vehicle 122 of Figs. 3A, 3B.

The containers 112 could store crops. For example, the stacker frame 900 and storage containers 112 could be part of a vertical farm. The lighting module 700 can be used to provide light to the crops growing in the containers 112. The light provided by the lighting module 700 may be adjusted for optimum crop growth. The crops may be plants or any biological matter.

### Container handling vehicle

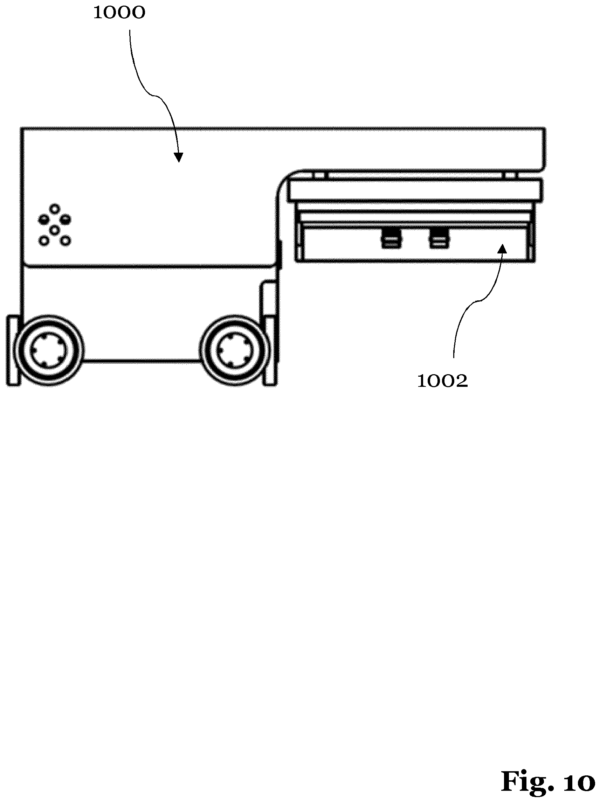

Fig. 10 shows a container handling vehicle 1000, for example the container handling vehicle of Fig. 3A, holding a module 1002. Module 1002 could be a lighting module 700 as described with reference to Figs. 7A, 7B. Module 1002 could be a power supply module 800 as described with reference to Fig. 8. The container handling vehicle 1000 can move along a rail system 116 with the module 1002. The container handling vehicle 1000 can fetch the module 1002. The container handling vehicle 1000 can engage with the module 1002 using a gripper or other engagement device.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A lighting module configured to fit atop a storage container for an automated storage and retrieval system.

2. A lighting module according to claim 1, wherein the module is configured as a container lid.

3. A lighting module according to claim 1 or 2, including an array of LEDs.

4. A lighting module according to claim 1, wherein the LEDs are uniformly distributed over a lower surface of the module.

5. A lighting module according to any preceding claim, further comprising a temperature sensor.

6. A lighting module according to any of the preceding claims, further comprising an internal power supply and/or electrical connections for connecting to an external power supply.

7. A lighting module according to claim 6, wherein the electrical connections include biasing means.

8. A lighting module according to any preceding claim comprising a gripper engagement device arranged to receive grippers of a container handling vehicle.

9. A power supply module configured to fit atop or below a storage container for a storage and retrieval system, the power supply comprising electrical connections for providing power to a stacker frame.

10. A stacker frame for receiving a plurality of storage containers and lighting modules according to any of claims 1 to 8, wherein the stacker frame comprising electrical connections for providing power to the lighting modules.

11. A stacker frame according to claim 10, wherein the stacker frame comprises an internal power supply.

12. A stacker frame according to claim 10 or 11 further comprising a connection to mains power.

13. A stacker frame containing one or more storage containers for an automated storage and retrieval system and one or more lighting modules according to any of claims 1 to 8.

14. A controller for controlling a lighting module as claimed in any one of claims 1 to 8.

15. A vertical farm comprising one or more lighting modules according any of claims 1 to 8 and/or a power supply according to claim 8 and/or one or more stacker frames according to any of claims 10 to 13.
